Europäisches Patentamt

European Patent Office

Office européen des brevets

(11) Numéro de publication: **0 299 817 B1**

(12) **FASCICULE DE BREVET EUROPEEN**

(45) Date de publication de fascicule du brevet: **22.09.93** (51) Int. Cl.5: **C08F 2/32**

(21) Numéro de dépôt: **88401511.6**

(22) Date de dépôt: **17.06.88**

(54) **Microlatex inverse utile comme adjuvant de flottation et de drainage et pour l'absorption et la retention de fluides aqueux.**

(30) Priorité: **25.06.87 FR 8708925**

(43) Date de publication de la demande:
**18.01.89 Bulletin 89/03**

(45) Mention de la délivrance du brevet:
**22.09.93 Bulletin 93/38**

(84) Etats contractants désignés:
**AT BE CH DE ES FR GB GR IT LI LU NL SE**

(56) Documents cités:
**FR-A- 2 524 895**
**FR-A- 2 565 592**
**FR-A- 2 567 525**

(73) Titulaire: **ELF ATOCHEM S.A.**
**4 & 8, Cours Michelet La Défense 10**
**F-92800 Puteaux(FR)**

(72) Inventeur: **Candau, Françoise**
**3, rue de Lens**
**F-67000 Strasbourg(FR)**
Inventeur: **Buchert, Pascale**
**1, rue Jérôme Guebwiller**
**F-67500 Haguenau(FR)**

(74) Mandataire: **Chaillot, Geneviève**
**Cabinet CHAILLOT 21, avenue Louise de Bettignies**
**F-92700 Colombes (FR)**

Rank Xerox (UK) Business Services
(3.10/3.6/3.3.1)

**Description**

La synthèse de polymères et copolymères hydrosolubles (p.ex.polyacrylamide et copolymère acide acrylique-acrylamide) fait actuellement l'objet de nombreux travaux tant en recherche fondamentale que finalisée. Le mode de préparation utilisé est généralement la polymérisation en émulsion inverse. Le produit final se présente alors sous forme d'une suspension colloïdale polymère dispersée dans une huile, appelée latex inverse. Ce procédé permet une dissolution rapide du polymère dans l'eau, sans formation de gels ou d'agrégats comme c'est le cas lorsque le produit est conditionné sous forme de poudre. Il présente en outre de grandes facilités de stockage et manipulation. Cependant un inconvénient majeur des latex inverses est leur manque de stabilité qui se traduit par une importante décantation au cours du temps ainsi que par une large distribution de taille des particules.

La présente invention concerne un procédé de préparation de microlatex dispersés dans une phase d'huile continue, par polymérisation (ou copolymérisation) dans une microémulsion du type eau dans l'huile d'au moins un monomère vinylique hydrosoluble et l'utilisation de ces microlatex inverses à l'absorption et la rétention de fluides aqueux. Dans ce procédé, le monomère hydrosoluble (ou le mélange de monomères) est dissout dans l'eau et dispersé dans un mélange de tensio-actif et d'huile de telle sorte que les proportions des constituants correspondent aux domaines monophasiques, appelés encore microémulsions, du diagramme de phase tensio-actif/huile/solution aqueuse de monomère. Le monomère est piégé à l'intérieur des micelles gonflées d'eau ou bien dans les domaines aqueux d'une microémulsion de structure bicontinue. Ces systèmes sont optiquement transparents, thermodynamiquement stables et se prêtent par conséquent en particulier à des réactions photochimiques. Un tel procédé, connu notamment par l'enseignement du brevet FR-A-2.524.895, a été appliqué en particulier à l'acrylamide, l'acide acrylique et la N-vinylpyrrolidone. Dans ce cas le monomère hydrosoluble est polymérisé en microémulsion par voie photochimique ou thermique. La méthode consiste à amorcer la polymérisation photochimiquement par exemple par irradiation utraviolette, ou thermiquement à l'aide d'un initiateur hydrophobe, par exemple l'azobisisobutyronitrile, ou hydrophile, par exemple le persulfate de potassium.

La polymérisation s'effectue très rapidement, par exemple en quelques minutes par voie photochimique, quantitativement et conduit à la formation de microlatex dont le rayon de particules est de l'ordre de 15 nm. Le tensio-actif utilisé fait de préférence partie de la classe des anioniques (tels que le di-2-éthyl hexylsulfosuccinate de sodium) ou de celle des cationiques (tels que l'hexadécyl benzène-diméthyl bromure d'ammonium). Il est également connu par le brevet FR-A-2.565.592 d'utiliser, pour la copolymérisation d'au moins deux monomères acryliques (par exemple acide (méth) acrylique et ses sels alcalins), des tensio-actifs non ioniques dont le HLB (équilibre hydrophile lipophile) est de 8 à 11.

Il est important de noter que les deux documents précités s'intéressent exclusivement à la (co)polymérisation de monomères non ioniques (acrylamide, N-vinylpyrrolidone) ou anioniques (acide (méth)-acrylique et ses sels alcalins) et qu'ils ne comportent aucune indication pouvant laisser supposer que les procédés de préparation de microlatex inverses en phase huileuse continue par polymérisation en microémulsion du type eau dans l'huile auraient pu être applicables dans le cas de monomères cationiques. Un premier problème que la présente invention s'est proposé de résoudre consiste donc à déterminer les conditions dans lesquelles ce type de procédé pourrait être appliqué utilement à la (co)polymérisation de monomères vinyliques hydrosolubles cationiques, le cas échéant en mélange avec au moins un monomère vinylique hydrosoluble non-ionique ou anionique. Un second problème que la présente invention vise à résoudre consiste à déterminer les conditions de préparation dans lesquelles les microlatex obtenus sont stables (thermodynamiquement) et optiquement transparents. Encore un autre problème que la présente invention s'est proposé de résoudre consiste à déterminer les conditions dans lesquelles les microlatex inverses ainsi obtenus pourraient être utilisés pour l'absorption et la rétention de fluides aqueux, ainsi que comme additifs (adjuvants de flottation et de drainage) dans la fabrication de la pâte à papier.

Un premier objet de la présente invention consiste en un microlatex inverse d'au moins un monomère vinylique hydrosoluble cationique, le cas échéant copolymérisé avec au moins un monomère vinylique hydrosoluble anionique ou non-ionique, ledit microlatex ayant été obtenu en présence d'au moins un agent tensio-actif tel que défini cî-après. Un tel microlatex, obtenu par le procédé décrit ultérieurement en plus amples détails, possede les propriétés et caractéristiques favorables suivantes :
- être stable (thermodynamiquement),
- être optiquement transparent,
- présenter un poids moléculaire du polymère (moyenne en poids) compris entre $2.10^6$ et $15.10^6$ environ, ce poids moléculaire étant déterminé par diffusion de la lumière,
- présenter un indice de polydispersité, défini comme le rapport du diamètre moyen en poids des particules de polymère à leur diamètre moyen en nombre, compris entre 1,05 et 1,2 environ,

- présenter un comportement rhéologique newtonien jusqu'à des fractions volumiques de phase dispersée (polymère gonflé d'eau) atteignant 55 % environ,
- présenter une viscosité limite à gradient de cisaillement nul( déterminée à 25°C) comprise entre 3 x $10^{-3}$ et 0.5 Pa.s environ, selon la fraction volumique de la phase dispersée.

Un second objet de la présente invention consiste en un procédé de préparation d'un microlatex inverse tel que défini précédemment, comprenant une première étape (a) de préparation d'une microémulsion inverse (du type eau-dans-huile) et une seconde étape (b) dans laquelle on soumet la microémulsion inverse obtenue dans l'étape (a) à des conditions de polymérisation, caractérisé en ce que l'étape (a) consiste à mélanger les constituants suivants :

(A) une solution aqueuse d'au moins un monomère vinylique hydrosoluble cationique, le cas échéant en mélange avec au moins un monomère vinylique hydrosoluble anionique ou non-ionique,

(B) une phase huileuse comprenant au moins un liquide hydrocarboné, et

(C) au moins un tensio-actif non ionique, en une proportion suffisante pour obtenir une microémulsion inverse, et ayant un HLB compris :

- soit entre 11 et 15 environ lorsque le monomère vinylique hydrosoluble cationique est seul ou en mélange avec un monomère vinylique hydrosoluble anionique,
- soit entre 7,5 et 13 environ lorsque le monomère vinylique hydrosoluble cationique est en mélange avec un monomère vinylique hydrosoluble non-ionique.

La concentration du monomère vinylique hydrosoluble cationique dans la solution aqueuse (A) est généralement comprise entre 5 et 80% en poids, de préférence entre 10 et 60% en poids.

Le liquide hydrocarboné présent dans la phase huileuse (B) est de préférence choisi parmi les hydrocarbures aliphatiques, linéaires, ramifiés, ou cycliques, ayant de 6 à 14 atomes de carbone, ou encore parmi les hydrocarbures aromatiques ayant de 6 à 15 atomes de carbone.

Pour obtenir 100 parties en poids de la microémulsion inverse selon l'invention on mélange de préférence :

- de 25 à 65 parties en poids de la solution aqueuse (A),
- de 25 à 60 parties en poids de la phase huileuse (B), et
- de 10 à 27 parties en poids du tensio-actif non-ionique (C).

Des exemples de tensio-actifs non ioniques utilisables selon la présente invention sont notamment l'hexaoléate de sorbitol polyoxyéthylèné, le sesquioléate de sorbitan, le trioléate de sorbitan éthoxylé, le trioléate de sorbitan et le mono-oléate de sorbitol polyoxyéthylèné ainsi que les copolymères comprenant au moins deux composants polymériques dérivés d'acides monocarboxyliques complexes liposolubles et un autre composant polymérique résidu d'un composé hydrosoluble contenant des motifs polyoxyalkylène, lesdits copolymères étant tels que ceux décrits dans la demande de brevet européen publiée sous le n° 0.258.120 ou leurs mélanges.

Des monomères vinyliques hydrosoluble cationiques entrant dans le cadre de la présente invention sont notamment des sels d'ammonium quaternaire insaturés répondant à la formule générale :

$$H_2C = C(R_1) - \underset{\underset{O}{\|}}{C} - A - R_2 - \overset{\oplus}{N} \overset{\nearrow R_3}{\underset{\searrow R_5}{- R_4}}, \ X^{\ominus}$$

dans laquelle :

- A est un atome d'oxygène ou un groupe NH,
- $R_1$ est un atome d'hydrogène ou un radical méthyle,
- $R_2$ est un radical alkyle, linéaire ou ramifié, ayant de 2 à 4 atomes de carbone,
- $R_3$, $R_4$ et $R_5$, identiques ou différents, sont des radicaux alkyles, linéaires ou ramifiés, ou aryles, et
- X est choisi parmi les atoms d'halogène et les groupes $-C_2H_5-SO_4$ et $-CH_3-SO_4$.

Des exemples de tels sels sont en particulier les chlorures de méthacryloyloxyéthyltriméthylammonium et d'acryloyloxyéthyltriméthylammonium.

Comme monomères vinyliques hydrosolubles anioniques utilisables selon la présente invention, on peut citer notamment l'acide acrylique, l'acide méthacrylique, l'acide 2-acrylamido 2-méthylpropanesulfonique et surtout leurs sels alcalins. Comme monomères vinyliques hydrosolubles non ioniques utilisables selon la présente invention, on peut citer notamment l'acrylamide, la méthacrylamide et la N-vinylpyrrolidone.

Dans le cadre de la présente invention, le monomère vinylique hydrosoluble cationique peut être mélangé en toutes proportions avec au moins un monomère vinylique hydrosoluble soit anionique soit non ionique tel que défini précèdemment. Toutefois dans de tels mélanges il est préférable que la proportion du monomère vinylique hydrosoluble cationique soit au moins égale à 5% en poids.

La proportion du tensio-actif non ionique dans la microémulsion inverse et le choix du HLB de ce tensio-actif sont deux éléments déterminatns pour l'efficacité du procédé selon l'invention. D'une part,sauf exception liée à la nature particulière des monomères vinyliques hydrosolubles utilisés ou à la nature particulière de la phase huileuse, une microémulsion inverse stable (thermodynamiquement) ne pourra généralement pas être obtenue lorsque la proportion du tensio-actif dans le mélange des constituants (A), (B) et (C) est inférieure à 10% en poids. D'autre part le choix du HLB du tensio-actif dépend des quatre facteurs suivants :
- polymérisation du monomère vinylique hydrosoluble cationique seul ou bien en mélange avec un comonomère,
- si le monomère cationique est en mélange avec un comonomère, nature (anionique ou non-ionique) et proportion de ce dernier,
- nature du monomère cationique, et
- nature de la phase huileuse (B).

Il est par ailleurs connu que dans ce type de procédé la quantité de tensio-actif requise dépend du HLB de celui-ci et passe généralement par une valeur minimale lorsque le HLB augmente. Etant donné que, pour des raisons d'ordre économique, on cherche le plus souvent à minimiser l'emploi de tensio-actif, cette valeur minimale constituera également un optimum industriel. Il est donc très important de déterminer dans chaque cas, en fonction des facteurs énumérés ci-dessus, le HLB du tensio-actif à utiliser. Pour illustrer cet aspect de l'invention, les exemples suivants peuvent être donnés : ainsi lorsque le chlorure de méthacryloyloxyéthyltriméthylammonium est polymérisé seul, la phase huileuse étant constituée de cyclohexane, il est préférable d'utiliser un tensio-actif (ou un mélange) non ionique ayant un HLB compris entre 12,8 et 13,2 environ. Lorsque le chlorure de méthacryloyloxyéthyltriméthylammonium est copolymérisé avec l'acrylamide, la phase huileuse étant constituée de cyclohexane, il est préférable d'utiliser un tensio-actif (ou un mélange) non ionique ayant un HLB compris entre 7,5 et 13 environ, ledit HLB étant de préférence corrélé à la fraction pondérale x du chlorure dans le mélange par la relation :

$$4x \ + \ 7,3 \leqq HLB \leqq 5,5x \ + \ 7,7$$

Compte tenu de l'enseignement technique qui précède, la détermination du HLB du tensio-actif à utiliser pour d'autres monomères est à la portée de l'homme de l'art.

Lors de la préparation de la microémulsion inverse, il est important que la température du mélange soit soigneusement contrôlée, en raison de la sensibilité à la température des microémulsions inverses en présence de tensio-actifs non ioniques. Cette influence de la température est d'autant plus sensible que la concentration en tensio-actif est plus proche de la teneur minimale requise pour obtenir une microémulsion inverse. En vue de réduire la teneur en tensio-actif nécessaire et afin de s'affranchir au maximum de l'influence de la température sur la stabilité des microémulsions inverses, ces dernières seront dans la mesure du possible préparées à une température aussi voisine que possible de celle qui aura été choisie pour la polymérisation.

Au cours de la seconde étape (b) du procédé selon l'invention, la microémulsion inverse préparée au cours de l'étape (a) est soumise à des conditions de polymérisation :
- photochimique, par exemple par irradiation ultraviolette, et/ou
- thermique, par mise en présence d'un initiateur radicalaire hydrophobe (tel que l'azobisisobutyronitrile) introduit avec la phase huileuse (B) ou hydrophile (tel que le persulfate de potassium ou d'ammonium) introduit avec la solution aqueuse (A), ou bien en présence d'un système Redox dans lequel le persulfate est utilisé en combinaison avec au moins un réducteur choisi parmi les polyhydrophénols, le sulfite et le bisulfite de sodium, le diméthylaminopropionitrile, les diazomercaptans et les ferricyanures.

La polymérisation s'effectue rapidement et quantitativement et conduit à la formation de microlatex stables et transparents contenant une teneur élevée en (co)polymère hydrosoluble. La durée de polymérisation est par exemple de 5 à 260 minutes par voie photochimique à température ambiante, de 5 à 360 minutes par voie thermique (la durée étant naturellement une fonction inverse de la température). La température utilisable au cours d'une polymérisation par voie thermique est généralement comprise entre 20 et 90°C environ.

Les microlatex selon l'invention sont utisables de manière particulièrement efficace en tant qu'adjuvants de flottation et de drainage dans la fabrication de la pâte à papier, cette application constituant le troisième objet de la présente invention.

D'autre part il est possible, par une variante du procédé selon l'invention, de modifier les microlatex inverses obtenus pour leur conférer des propriétés d'absorption et de rétention d'eau. Cette modification consiste à incorporer à la microémulsion inverse préparée dans l'étape (a) au moins un agent réticulant en quantité suffisante par rapport à la somme des monomères à polymériser au cours de l'étape (b). Par quantité suffisante on entend une proportion de préférence au moins égale à 0,2 % en poids et de préférence au plus égale à 5 % en poids par rapport au(x) monomère(s). Les microlatex inverses réticulés ainsi obtenus sont utilisables pour l'absorption et la rétention de fluides aqueux, notamment dans des articles pour l'hygiène et la santé, ceci constituant encore un autre objet de la présente invention.

Comme agents réticulants utilisables dans cette variante du procédé selon l'invention on peut citer :

1) des composés ayant au moins deux doubles liaisons polymérisables et,

2) des composés ayant au moins une double liaison polymérisable et au moins un groupe fonctionnel réactif avec au moins l'un des monomères.

Des exemples des composés répertoriés en premièrement ci-dessus, ayant au moins deux doubles liaisons polymérisables, sont :

a) les composés di- ou polyvinyliques, tels que notamment le divinylbenzène, le divinyltoluène, le divinylxylène, l'éther divinylique, la divinylcétone et le trivinylbenzène,

b) les di- ou polyesters d'acides mono- ou polycarboxyliques non saturés avec des polyols, tels que les esters des acides di- ou tri(méth)acryliques avec des polyols (tels que l'éthylène glycol, le triméthylol-propane, le glycérol, les polyoxyéthylèneglycols, les polyoxypropylèneglycols, etc.), les polyesters non saturés (que l'on peut obtenir par réaction de l'un quelconque des polyols précités avec un acide insaturé tel que l'acide maléique), les esters d'acide di- ou tri-(méth)acrylique (que l'on peut obtenir par réaction d'un polyépoxide avec l'acide (méth)acrylique),

c) les bis (méth)acrylamides tels que la N,N′-méthylène-bis-acrylamide,

(d) les esters carbamyliques que l'on peut obtenir en faisant réagir des polyisocyanates (tels que le toluène diisocyanate, l'hexaméthylène diisocyanate, le 4,4′-diphénylméthanediisocyanate et les prépoly-mères contenant un groupe NCO obtenus en faisant réagir un tel diisocyanate avec des composés contenant des atomes d'hydrogène actifs) avec des monomères contenant des groupes hydroxyles. De tels esters sont notamment ceux des acides di(méth)acryliques que l'on peut obtenir en faisant réagir les diisocyanates précités avec le (méth)acrylate d'hydroxyéthyle,

e) les éthers di- ou poly(méth)allyliques de polyols (tels que les alkylène-glycols, le glycérol, les polyalkylèneglycols, les polyoxyalkylènepolyols, les hydrates de carbones), tels que l'éther diallylique du polyéthylène glycol, l'amidon allylé et la cellulose allylée,

f) les esters di- ou polyallyliques d'acides polycarboxyliques tels que le phtalate de diallyle, l'adipate de diallyle et

g) les esters d'acides mono- ou polycarboxyliques non saturés avec des éthers mono(méth)allyliques de polyols, tels que l'ester de l'acide (méth)acrylique avec l'éther monoallylique du polyéthylène glycol.

Les composés du type deuxièmement précités ayant au moins une double liaison polymérisable et au moins un groupe fonctionnel réactif avec au moins l'un des monomères sont les composés éthyléniquement insaturés contenant au moins un groupe réactif avec les groupes carboxyle, anhydride carboxylique, hydroxyle, amine ou amide. Des exemples de ces composés sont la N-méthylol(méth)acrylamide et le (méth)acrylate de glycidyle.

Les exemples ci-après sont donnés à titre illustratif et non limitatif de la présente invention.

## EXEMPLE 1

116 g de cyclohexane et 24 g d'un mélange (ayant un HLB de 12,9) de monooléate de sorbitan polyoxyéthyléné (TWEEN 80) et de sesquioléate de sorbitan (ARLACEL 83) sont mélangés sous agitation. Par ailleurs on dissout 30 g de chlorure de méthacryloyloxyéthyltriméthylammonium dans 30 g d'eau distillée, puis on ajoute cette solution au mélange de cyclohexane et tensio-actifs. La microémulsion ainsi obtenue, dans laquelle on introduit 0,3 % en poids d'azobisisobutyronitrile par rapport au monomère, est dégazée pendant 30 minutes à 20°C sous atmosphère d'azote en vue d'éliminer l'oxygène susceptible d'agir en tant qu'inhibiteur.

La microémulsion est alors irradiée sous ultra-violet au sein d'un réacteur de 500 ml thermostaté à 20°C. Après une heure de polymérisation on obtient un microlatex clair, ayant une viscosité limite (à gradient de cisaillement nul) de $6 \times 10^{-3}$ Pa.s, présentant une fraction volumique de la phase dispersée égale à 37 %, présentant un poids moléculaire du polymère égal à $4,8.10^6$ et un indice de polydispersité (tel que défini précédemment) égal à 1,1.

### EXEMPLE 2

On reproduit le processus opératoire de l'exemple 1 en modifiant seulement les quantités des ingrédients comme suit :
- cyclohexane : 59,3 g
- tensio-actifs : 31,9 g
- eau distillée : 49,4 g
- chlorure de méthacryloyloxyéthyltriméthylammonium : 59,4 g.

Après 45 minutes de polymérisation on obtient un microlatex se présentant sous la forme d'un gel clair.

### EXEMPLE 3

65,4 g d'une coupe isoparaffinique $C_{13}$-$C_{14}$ commercialisée par ESSO CHIMIE sous l'appellation ISOPAR M et 56,1 g d'un mélange (ayant un HLB de 8,7) des tensio-actifs TWEEN 80 et ARLACEL 83 sont mélangés sous agitation. Par ailleurs on dissout 9,8 g de chlorure de méthacryloyloxyéthyltriméthylammoniumet 29,1 g d'acrylamide dans 39,5 g d'eau distillée, puis on ajoute cette solution au mélange de la phase huileuse et des tensio-actifs. Après avoir introduit 0,12 g d'azobisisobutyronitrile dans la microémulsion obtenue, celle-ci est irradiée sous ultraviolet à 20°C pendant 2 heures au sein d'un réacteur de 500 ml thermostaté, tout en maintenant un courant d'azote. On obtient un microlatex se présentant sous la forme d'un fluide clair.

### Exemple 4

On reproduit le processus opératoire de l'exemple 1 en modifiant seulement les quantités des ingrédients comme suit :
- cyclohexane : 94 g
- tensio-actifs : 26 g
- eau distillée : 40 g
- chlorure de méthacryloyloxyéthyltriméthylammonium: 40 g

et en ajoutant à la microémulsion 0,08 g de méthylène bisacrylamide (agent réticulant). Le microlatex ainsi obtenu est alors traité de façon connue en soi pour récupérer le polymère cationique réticulé. Celui-ci est ensuite séché dans une étuve ventilée à 60°C pendant 24 heures puis sous vide partiel (0,13 bar) à 30°C. Après broyage sous forme de poudre, il est soumis au test suivant :

### Test de capacité d'absorption et de rétention d'eau

Le polymère est additionné progressivement d'eau pure jusqu'à saturation. On mesure alors le poids d'eau absorbée pour parvenir à saturation. Celui-ci est ici égal à 15 fois le poids de polymère.

### Exemple 5

On reproduit le processus opératoire de l'exemple 1 en modifiant les quantités des ingrédients comme suit :
- cyclohexane : 75 g
- tension-actifs : 25 g
- eau distillée : 50 g
- chlorure de méthacryloyloxyéthyltriméthylammonium : 50 g.

Après polymérisation on obtient un microlatex transparent, ayant une viscosité limite (à gradient de cisaillement nul) de 0.15 Pa.s, présentant une fraction volumique de la phase dispersée égale à 54 %, présentant un poids moléculaire du polymère (moyenne en poids) égal à $12,4.10^6$ et un indice de polydispersité égal à 1,1.

### Exemple 6

On reproduit le processus opératoire de l'exemple 1 en modifiant les quantités des ingrédients comme suit :
- coupe isoparaffinique ISOPAR M : 87 g
- tensio-actifs : 26 g
- eau distillée : 43,5 g
- chlorure d'acryloyloxyéthyltriméthylammonium : 43,5 g.

Après polymérisation on obtient un microlatex optiquement transparent et thermodynamiquement stable.

### Revendications
**Revendications pour les Etats contractants suivants : AT, BE, CH, DE, FR, GB, GR, IT, LI, LU, NL, SE**

**1.** Microlatex inverse, thermodynamiquement stable et optiquement transparent, d'au moins un monomère vinylique hydrosoluble cationique, le cas échéant copolymérisé avec au moins un monomère vinylique hydrosoluble anionique ou non-ionique, ledit microlatex ayant été obtenu en présence d'au moins un tensio-actif non-ionique ayant un HLB compris :
- soit entre 11 et 15 lorsque le monomère vinylique hydrosoluble cationique est seul ou en mélange avec un monomère vinylique hydrosoluble anionique ;
- soit entre 7,5 et 13 lorsque le monomère vinylique hydrosoluble cationique est en mélange avec un monomère vinylique hydrosoluble non-ionique.

**2.** Microlatex selon la revendication 1, caractérisé par le fait qu'il présente un poids moléculaire du polymère compris entre $2 \times 10^6$ et $15 \times 10^6$.

**3.** Microlatex selon l'une des revendications 1 et 2, caractérisé par le fait qu'il présente un indice de polydispersité du polymère compris entre 1,05 et 1,2.

**4.** Microlatex selon l'une des revendications 1 à 3, caractérisé par le fait que le monomère vinylique hydrosoluble cationique est un sel d'ammonium quaternaire de formule générale :

$$H_2C = C(R_1) - \underset{\underset{O}{\|}}{C} - A - R_2 - \overset{\oplus}{N} \overset{\diagup R_3}{\underset{\diagdown R_5}{- R_4}}, \ X^{\ominus}$$

dans laquelle :
- A est un atome d'oxygène ou un groupe NH,
- $R_1$ est un atome d'hydrogène ou un radical méthyle,
- $R_2$ est un radical alkyle, linéaire ou ramifié, ayant de 2 à 4 atomes de carbone,
- $R_3$, $R_4$ et $R_5$, identiques ou différents, sont des radicaux alkylés, linéaires ou ramifiés, ou aryles, et
- X est choisi parmi les atomes halogène et les groupes $-C_2H_5-SO_4$ et $-CH_3-SO_4$.

**5.** Microlatex selon l'une des revendications 1 à 4, caractérisé par le fait que le monomère vinylique hydrosoluble anionique est choisi parmi l'acide acrylique, l'acide méthacrylique, l'acide 2-acrylamido 2-méthylpropanesulfonique et leurs sels alcalins.

**6.** Microlatex selon l'une des revendications 1 à 5, caractérisé par le fait que le monomère vinylique hydrosoluble non-ionique est choisi parmi l'acrylamide, le méthacrylamide et la N-vinylpyrrolidone.

**7.** Microlatex selon l'une des revendications 1 à 6, caractérisé par le fait que la phase huileuse comprend au moins un liquide hydrocarboné choisi parmi les hydrocarbures aliphatiques, linéaires, ramifiés ou cycliques, ayant de 6 à 14 atomes de carbone.

**8.** Microlatex selon l'une des revendications 1 à 7, caractérisé par le fait que le polymère ou copolymère est réticulé.

**9.** Procédé de préparation d'un microlatex tel que défini à l'une des revendications 1 à 8, comprenant :
- une première étape (a) de préparation d'une microémulsion inverse (du type eau-dans-huile) ; et
- une seconde étape (b) dans laquelle on soumet la microémulsion inverse obtenue dans l'étape (a) à des conditions de polymérisation,

caractérisé en ce que l'étape (a) consiste à mélanger les constituants suivants :

(A) une solution aqueuse d'au moins un monomère vinylique hydrosoluble cationique, le cas échéant en mélange avec au moins un monomère vinylique hydrosoluble anionique ou non-ionique,

(B) une phase huileuse comprenant au moins un liquide hydrocarboné, et

(C) au moins un tensio-actif non-ionique, en une proportion suffisante pour obtenir une microémulsion inverse, et ayant un HLB compris :
- soit entre 11 et 15 lorsque le monomère vinylique hydrosoluble cationique est seul ou en mélange avec un monomère vinylique hydrosoluble anionique,
- soit entre 7,5 et 13 lorsque le monomère vinylique hydrosoluble cationique est en mélange avec un monomère vinylique hydrosoluble non-ionique,

avec incorporation éventuelle à la microémulsion inverse préparée dans l'étape (a) d'au moins un agent réticulant en quantité suffisante par rapport à la somme des monomères à polymériser au cours de l'étape (b).

**10.** Procédé selon la revendication 9, caractérisé par le fait que la concentration du monomère vinylique hydrosoluble cationique dans la solution aqueuse (A) est comprise entre 5 et 80% en poids.

**11.** Procédé selon l'une des revendications 9 et 10, caractérisé par le fait que, pour 100 parties en poids de la microémulsion inverse, on mélange :
- de 25 à 65 parties en poids de la solution aqueuse (A),
- de 25 à 60 parties en poids de la phase huileuse (B), et
- de 10 à 27 parties en poids du tensio-actif non-ionique (C).

**12.** Procédé selon l'une des revendications 9 à 11, caractérisé par le fait que la proportion de l'agent réticulant par rapport au(x) monomère(s) à polymériser au cours de l'étape (b) est comprise entre 0,2 et 5% en poids.

**13.** Utilisation d'un microlatex inverse tel que défini à l'une des revendications 1 à 7, en tant d'adjuvant de flottation et de drainage dans la fabrication de la pâte à papier.

**14.** Utilisation d'un microlatex inverse tel que défini à la revendication 8 pour l'absorption et la rétention de fluides aqueux.

**Revendications pour les l'Etat contractant suivants : ES**

**1.** Procédé de préparation d'un microlatex inverse, thermodynamiquement stable et optiquement transparent, d'au moins un monomère vinylique hydrosoluble cationique, le cas échéant copolymérisé avec au moins un monomère vinylique hydrosoluble anionique ou non-ionique, ledit procédé comprenant :
- une première étape (a) de préparation d'une microémulsion inverse (du type eau-dans-huile) ; et
- une seconde étape (b) dans laquelle on soumet la microémulsion inverse obtenue dans l'étape (a) à des conditions de polymérisation,

caractérisé en ce que l'étape (a) consiste à mélanger les constituants suivants :

(A) une solution aqueuse d'au moins un monomère vinylique hydrosoluble cationique, le cas échéant en mélange avec au moins un monomère vinylique hydrosoluble anionique ou non-ionique,

(B) une phase huileuse comprenant au moins un liquide hydrocarboné, et

(C) au moins un tensio-actif non-ionique, en une proportion suffisante pour obtenir une microémulsion inverse, et ayant un HLB compris :
- soit entre 11 et 15 lorsque le monomère vinylique hydrosoluble cationique est seul ou en mélange avec un monomère vinylique hydrosoluble anionique,
- soit entre 7,5 et 13 lorsque le monomère vinylique hydrosoluble cationique est en mélange avec un monomère vinylique hydrosoluble non-ionique.

**2.** Procédé selon la revendication 1, caractérisé par le fait qu'il conduit à un microlatex présentant un poids moléculaire du polymère compris entre $2 \times 10^6$ et $15 \times 10^6$.

**3.** Procédé selon l'une des revendications 1 et 2, caractérisé par le fait qu'il conduit à un microlatex présentant un indice de polydispersité du polymère compris entre 1,05 et 1,2.

**4.** Procédé selon l'une des revendications 1 à 3, caractérisé par le fait qu'on utilise, comme monomère vinylique hydrosoluble cationique, un sel d'ammonium quaternaire de formule générale :

$$H_2C = C(R_1) - \underset{\underset{O}{\|}}{C} - A - R_2 - \overset{+}{N} \underset{R_5}{\overset{R_3}{\diagup}} R_4, \; X^{-}$$

dans laquelle :
- A est un atome d'oxygène ou un groupe NH,
- $R_1$ est un atome d'hydrogène ou un radical méthyle,
- $R_2$ est un radical alkyle, linéaire ou ramifié, ayant de 2 à 4 atomes de carbone,
- $R_3$, $R_4$ et $R_5$, identiques ou différents, sont des radicaux alkylés, linéaires ou ramifiés, ou aryles, et
- X est choisi parmi les atomes halogène et les groupes $-C_2H_5-SO_4$ et $-CH_3-SO_4$.

**5.** Procédé selon l'une des revendications 1 à 4, caractérisé par le fait qu'on utilise, comme monomère vinylique hydrosoluble anionique, un monomère choisi parmi l'acide acrylique, l'acide méthacrylique, l'acide 2-acrylamido 2-méthylpropanesulfonique et leurs sels alcalins.

**6.** Procédé selon l'une des revendications 1 à 5, caractérisé par le fait qu'on utilise, comme monomère vinylique hydrosoluble non-ionique, un monomère choisi parmi l'acrylamide, le méthacrylamide et la N-vinylpyrrolidone.

**7.** Procédé selon l'une des revendications 1 à 6, caractérisé par le fait qu'on utilise une phase huileuse comprenant au moins un liquide hydrocarboné choisi parmi les hydrocarbures aliphatiques, linéaires, ramifiés ou cycliques, ayant de 6 à 14 atomes de carbone.

**8.** Procédé selon l'une des revendications 1 à 7, caractérisé par le fait que la concentration du monomère vinylique hydrosoluble cationique dans la solution aqueuse (A) est comprise entre 5 et 80% en poids.

**9.** Procédé selon l'une des revendications 1 à 8, caractérisé par le fait que, pour 100 parties en poids de la microémulsion inverse, on mélange :
- de 25 à 65 parties en poids de la solution aqueuse (A),
- de 25 à 60 parties en poids de la phase huileuse (B), et
- de 10 à 27 parties en poids du tensio-actif non-ionique (C).

**10.** Procédé selon l'une des revendications 1 à 9, caractérisé par le fait que la proportion de l'agent réticulant par rapport au(x) monomère(s) à polymériser au cours de l'étape (b) est comprise entre 0,2 et 5% en poids.

**11.** Procédé selon l'une des revendications 1 à 10, caractérisé par le fait qu'on incorpore à la microémulsion inverse préparée dans l'étape (a) au moins un agent réticulant en quantité suffisante par rapport à la somme des monomères à polymériser au cours de l'étape (b).

**12.** Utilisation d'un microlatex inverse préparé par le procédé tel que défini à l'une des revendications 1 à 10, en tant d'adjuvant de flottation et de drainage dans la fabrication de la pâte à papier.

**13.** Utilisation d'un microlatex inverse préparé par le procédé tel que défini à la revendication 11 pour l'absorption et la rétention de fluides aqueux.

**Claims**

**Claims for the following Contracting States : AT, BE, CH, DE, FR, GB, GR, IT, LI, LU, NL, SE**

**1.** Thermodynamically stable and optically transparent reverse microlatex, of at least one cationic water-soluble vinyl monomer, if appropriate copolymerised with at least one anionic or nonionic water-soluble vinyl monomer, the said microlatex having been obtained in the presence of at least one nonionic surface-active agent having an HLB of:
- either between 11 and 15 when the cationic water-soluble vinyl monomer is alone or mixed with an anionic water-soluble vinyl monomer;
- or between 7.5 and 13 when the cationic water-soluble vinyl monomer is mixed with a nonionic water-soluble vinyl monomer.

**2.** Microlatex according to Claim 1, characterised in that it has a molecular weight of the polymer of between $2 \times 10^6$ and $15 \times 10^6$.

**3.** Microlatex according to either of Claims 1 and 2, characterised in that it has a polydispersity index of the polymer of between 1.05 and 1.2.

**4.** Microlatex according to one of Claims 1 to 3, characterised in that the cationic water-soluble vinyl monomer is a quaternary ammonium salt of general formula:

$$H_2C = C(R_1) - \underset{\underset{O}{\|}}{C} - A - R_2 - \overset{\oplus}{N} \overset{/R_3}{\underset{\backslash R_5}{-}} R_4, \; X^{\ominus}$$

in which:
- A is an oxygen atom or an NH group,
- $R_1$ is a hydrogen atom or a methyl radical,
- $R_2$ is a linear or branched alkyl radical having from 2 to 4 carbon atoms,
- $R_3$, $R_4$ and $R_5$, which are identical or different, are linear or branched alkyl radicals or aryl radicals, and
- X is chosen from the halogen atoms and the groups $C_2H_5\text{-}SO_4$ and $CH_3\text{-}SO_4$.

**5.** Microlatex according to one of Claims 1 to 4, characterised in that the anionic water-soluble vinyl monomer is chosen from acrylic acid, methacrylic acid, 2-acrylamido-2-methylpropanesulphonic acid and their alkaline salts.

**6.** Microlatex according to one of Claims 1 to 5, characterised in that the nonionic water-soluble vinyl monomer is chosen from acrylamide, methacrylamide and N-vinylpyrrolidone.

**7.** Microlatex according to one of Claims 1 to 6, characterised in that the oily phase comprises at least one hydrocarbon liquid chosen from the linear, branched or cyclic aliphatic hydrocarbons having from 6 to 14 carbon atoms.

**8.** Microlatex according to one of Claims 1 to 7, characterised in that the polymer or copolymer is crosslinked.

**9.** Process for the preparation of a microlatex as defined in one of Claims 1 to 8, comprising:
- a first stage (a) for the preparation of a reverse microemulsion (of the water-in-oil type); and
- a second stage (b) in which the reverse microemulsion obtained in stage (a) is subjected to polymerisation conditions,

characterised in that stage (a) consists in mixing the following constituents:

(A) an aqueous solution of at least one cationic water-soluble vinyl monomer, if appropriate mixed with at least one anionic or nonionic water-soluble vinyl monomer,

(B) an oily phase comprising at least one hydrocarbon liquid, and

(C) at least one nonionic surface-active agent, in a proportion sufficient to obtain a reverse microemulsion, and having an HLB of:

- either between 11 and 15 when the cationic water-soluble vinyl monomer is alone or mixed with an anionic water-soluble vinyl monomer,
- or between 7.5 and 13 when the cationic water-soluble vinyl monomer is mixed with a nonionic water-soluble vinyl monomer,

with optional incorporation in the reverse microemulsion prepared in stage (a) of at least one crosslinking agent in a sufficient amount with respect to the sum of the monomers to be polymerised during stage (b).

10. Process according to Claim 9, characterised in that the concentration of the cationic water-soluble vinyl monomer in the aqueous solution (A) is between 5 and 80 % by weight.

11. Process according to either of Claims 9 and 10, characterised in that, for 100 parts by weight of the reverse microemulsion, there are mixed:

- from 25 to 65 parts by weight of the aqueous solution (A),
- from 25 to 60 parts by weight of the oily phase (B), and
- from 10 to 27 parts by weight of the nonionic surface-active agent (C).

12. Process according to one of Claims 9 to 11, characterised in that the proportion of the crosslinking agent with respect to the monomer(s) to be polymerised during stage (b) is between 0.2 and 5 % by weight.

13. Use of a reverse microlatex as defined in one of Claims 1 to 7 as a flotation and drainage adjuvant in the manufacture of paper pulp.

14. Use of a reverse microlatex as defined in Claim 8 for absorbing and retaining aqueous fluids.

**Claims for the following Contracting State : ES**

1. Process for the preparation of a thermodynamically stable and optically transparent reverse microlatex, of at least one cationic water-soluble vinyl monomer, if appropriate copolymerised with at least one anionic or nonionic water-soluble vinyl monomer, the said process comprising:

- a first stage (a) for the preparation of a reverse microemulsion (of the water-in-oil type); and
- a second stage (b) in which the reverse microemulsion obtained in stage (a) is subjected to polymerisation conditions,

characterised in that stage (a) consists in mixing the following constituents:

(A) an aqueous solution of at least one cationic water-soluble vinyl monomer, if appropriate mixed with at least one anionic or nonionic water-soluble vinyl monomer,

(B) an oily phase comprising at least one hydrocarbon liquid, and

(C) at least one nonionic surface-active agent, in a proportion sufficient to obtain a reverse microemulsion, and having an HLB of:

- either between 11 and 15 when the cationic water-soluble vinyl monomer is alone or mixed with an anionic water-soluble vinyl monomer,
- or between 7.5 and 13 when the cationic water-soluble vinyl monomer is mixed with a nonionic water-soluble vinyl monomer.

2. Process according to Claim 1, characterised in that it leads to a microlatex having a molecular weight of the polymer of between $2 \times 10^6$ and $15 \times 10^6$.

3. Process according to either of Claims 1 and 2, characterised in that it leads to a microlatex having a polydispersity index of the polymer of between 1.05 and 1.2.

4. Process according to one of Claims 1 to 3, characterised in that there is used, as cationic water-soluble vinyl monomer, a quaternary ammonium salt of the general formula:

$$H_2C = C(R_1) - \underset{O}{\overset{\parallel}{C}} - A - R_2 - \overset{\oplus}{\underset{R_5}{\overset{R_3}{N}}} - R_4, \ X^{\ominus}$$

in which:
- A is an oxygen atom or an NH group,
- $R_1$ is a hydrogen atom or a methyl radical,
- $R_2$ is a linear or branched alkyl radical having from 2 to 4 carbon atoms,
- $R_3$, $R_4$ and $R_5$, which are identical or different, are linear or branched alkyl radicals or aryl radicals, and
- X is chosen from the halogen atoms and the groups $C_2H_5$-$SO_4$ and $CH_3$-$SO_4$.

5. Process according to one of Claims 1 to 4, characterised in that there is used, as anionic water-soluble vinyl monomer, a monomer chosen from acrylic acid, methacrylic acid, 2-acrylamido-2-methylpropanesulphonic acid and their alkaline salts.

6. Process according to one of Claims 1 to 5, characterised in that there is used, as nonionic water-soluble vinyl monomer, a monomer chosen from acrylamide, methacrylamide and N-vinylpyrrolidone.

7. Process according to one of Claims 1 to 6, characterised in that there is used an oily phase comprising at least one hydrocarbon liquid chosen from the linear, branched or cyclic aliphatic hydrocarbons having from 6 to 14 carbon atoms.

8. Process according to one of Claims 1 to 7, characterised in that the concentration of the cationic water-soluble vinyl monomer in the aqueous solution (A) is between 5 and 80 % by weight.

9. Process according to one of Claims 1 to 8, characterised in that, for 100 parts by weight of the reverse microemulsion, there are mixed:
- from 25 to 65 parts by weight of the aqueous solution (A),
- from 25 to 60 parts by weight of the oily phase (B), and
- from 10 to 27 parts by weight of the nonionic surface-active agent (C).

10. Process according to one of Claims 1 to 9, characterised in that the proportion of the crosslinking agent with respect to the monomer(s) to be polymerised during stage (b) is between 0.2 and 5 % by weight.

11. Process according to one of Claims 1 to 10, characterised in that there is incorporated in the reverse microemulsion prepared in stage (a) at least one crosslinking agent in a sufficient quantity with respect to the sum of the monomers to be polymerised during stage (b).

12. Use of a reverse microlatex prepared by the process as defined in one of Claims 1 to 10 as a flotation and drainage adjuvant in the manufacture of paper pulp.

13. Use of a reverse microlatex prepared by the process as defined in Claim 11 for absorbing and retaining aqueous fluids.

**Patentansprüche**
**Patentansprüche für folgende Vertragsstaaten : AT, BE, CH, DE, FR, GB, GR, IT, LI, LU, NL, SE**

1. Umgekehrter, thermodynamisch stabiler und optisch transparenter Mikrolatex, bestehend aus mindestens einem wasserlöslichen, kationischen Vinylmonomeren, welches gegebenenfalls mit wenigstens einem wasserlöslichen, anionischen oder nichtionischen Vinylmonomeren copolymerisiert wird, wobei der genannte Mikrolatex in Gegenwart von mindestens einem nichtionischen Tensid erhalten wurde, das einen HLB-Wert (Gleichgewicht hydrophil-lipophil):
- entweder zwischen 11 bis 15 besitzt, wenn das wasserlösliche, kationische Vinylmonomere allein oder in Mischung mit einem wasserlöslichen, anionischen Vinylmonomeren vorliegt,
- oder zwischen 7,5 und 13, wenn das wasserlösliche kationische Vinylmonomere in Mischung mit einem wasserlöslichen, nichtionischen Vinylmonomeren vorliegt.

2. Mikrolatex nach Anspruch 1, dadurch gekennzeichnet, daß er eine molare Masse des Polymeren zwischen $2 \times 10^6$ und $15 \times 10^6$ aufweist.

3. Mikrolatex nach einem der Anspruche 1 oder 2, dadurch gekennzeichnet, daß er einen Polydispersitätfaktor des Polymeren zwischen 1,05 und 1,2 besitzt.

4. Mikrolatex nach einem der Ansprüche 1 bis 3, dadurch gekennzeichnet, daß das wasserlösliche, kationische Vinylmonomere ein quarternäres Ammoniumsalz der allgemeinen Formel:

$$H_2C = C(R_1) - \underset{\underset{O}{\parallel}}{C} - A - R_2 - \overset{\oplus}{\underset{R_5}{N}} - R_4 \, , \, X^{\ominus}$$

ist, in welcher:
- A ein Sauerstoffatom oder eine NH-Gruppe darstellt,
- $R_1$ ein Wasserstoffatom oder einen Methylrest darstellt,
- $R_2$ einen linearen oder verzweigten Alkylrest mit 2 bis 4 Kohlenstoffatomen darstellt,
- $R_3$ , $R_4$ und $R_5$ gleich oder unterschiedlich sind und lineare oder verzweigte Alkyl- oder Arylreste darstellen und
- X aus Halogenatomen und $C_2H_5SO_4$- sowie $CH_3SO_4$ -Gruppen ausgewählt ist.

5. Mikrolatex nach einem der Ansprüche 1 bis 4, dadurch gekennzeichnet, daß das wasserlösliche, anionische Vinylmonomere aus Acrylsäure, Methacrylsäure, 2-Acrylamido-2-methylpropansulfonsäure und ihren Alkalisalzen ausgewählt ist.

6. Mikrolatex nach einem der Ansprüche 1 bis 5, dadurch gekennzeichnet, daß das wasserlösliche, nichtionische Vinylmonomere aus Acrylamid, Methacrylamid und N-Vinylpyrrolidon ausgewählt ist.

7. Mikrolatex nach einem der Ansprüche 1 bis 6, dadurch gekennzeichnet, daß die ölige Phase mindestens einen flüssigen Kohlenwasserstoff enthält, der ausgewählt ist aus linearen, verzweigten oder zyklischen Kohlenwasserstoffen mit 6 bis 14 Kohlenstoffatomen.

8. Mikrolatex nach einem der Ansprüche 1 bis 7, dadurch gekennzeichnet, daß das Polymere oder das Copolymere vernetzt ist.

9. Verfahren zur Herstellung eines Mikrolatex nach einem der Ansprüche 1 bis 8, welches:
- eine erste Stufe a) zur Herstellung einer umgekehrten Mikroemulsion (vom Typ Wasser-in-Öl) umfaßt und
- eine zweite Stufe b), in welcher die gemäß Stufe a) erhaltene umgekehrte Mikroemulsion der Polymerisation unterworfen wird,

dadurch gekennzeichnet, daß in der Stufe a) die folgenden Bestandteile vermischt werden:
A) eine wässrige Lösung von mindestens einem wasserlöslichen, kationischen Vinylmonomeren, gegebenenfalls vermischt mit wenigstens einem wasserlöslichen, anionischen oder nichtionischen Vinylmonomeren,
B) eine ölige Phase, die mindestens einen flüssigen Kohlenwasserstoff enthält und
C) wenigstens ein nichtionisches Tensid in ausreichender Menge, um eine umgekehrte Mikroemulsion zu erhalten und welches einen HLB-Wert:
- entweder zwischen 11 und 15 besitzt, wenn das wasserlösliche, kationische Vinylmonomere allein vorliegt oder in Mischung mit einem wasserlöslichen, anionischen Vinylmonomeren

EP 0 299 817 B1

- oder zwischen 7,5 und 13, wenn das wasserlösliche kationische Vinylmonomere vermischt mit einem wasserlöslichen nichtionischen Vinylmonomeren vorliegt,

wobei gegebenenfalls der in der ersten Stufe a) hergestellten, umgekehrten Mikroemulsion mindestens ein Vernetzungsmittel in ausreichender Menge, in Bezug auf die Summe der im Verlauf der Stufe b) zu polymerisierenden Monomeren, hinzugegeben wird.

10. Verfahren nach Anspruch 9, dadurch gekennzeichnet, daß die Konzentration des wasserlöslichen, kationischen Vinylmonomeren in der wässrigen Lösung A) zwischen 5 und 80 Gewichtsprozent beträgt.

11. Verfahren nach einem der Ansprüche 9 oder 10, dadurch gekennzeichnet, daß man auf 100 Gewichtsteile der umgekehrten Mikroemulsion:
- 25 bis 65 Gewichtsteile der wässrigen Lösung A),
- 25 bis 60 Gewichtsteile der öligen Phase B) und
- 10 bis 27 Gewichtsteile des nichtionischen Tensids C)
vermischt.

12. Verfahren nach einem der Ansprüche 9 bis 11, dadurch gekennzeichnet, daß das Verhältnis des Vernetzungsmittels zu dem(den) im Verlauf der Stufe b) zu polymerisierenden Monomeren zwischen 0,2 und 5 Gewichtsprozent beträgt.

13. Anwendung eines umgekehrten Mikrolatex nach einem der Ansprüche 1 bis 7 als Flotations- und Entwässerungshilfsmittel bei der Papiermassenherstellung.

14. Anwendung eines umgekehrten Mikrolatex nach Anspruch 8 für die Absorption und Zurückhaltung von wässrigen Lösungen.

**Patentansprüche für folgenden Vertragsstaat : ES**

1. Verfahren zur Herstellung eines umgekehrten, thermodynamisch stabilen und optisch transparenten, Mikrolatex aus mindestens einem kationischen, wasserlöslichen Vinylmonomeren, das gegebenenfalls mit mindestens einem wasserlöslichen, anionischen oder nichtionischen Vinylmonomeren copolymerisiert ist, wobei das Verfahren:
- eine erste Stufe a) zur Herstellung einer umgekehrten Mikroemulsion (vom Typ Wasser-in-Öl) umfaßt und
- eine zweite Stufe b), bei der die nach der ersten Stufe a) erhaltene umgekehrte Mikroemulsion einer Polymerisation unterworfen wird,
dadurch gekennzeichnet, daß in der Stufe a) die folgenden Bestandteile vermischt werden:
A) eine wässrige Lösung von mindestens einem wasserlöslichen kationischen Vinylmonomeren, gegebenenfalls vermischt mit wenigstens einem wasserlöslichen anionischen oder nichtionischen Vinylmonomeren,
B) eine ölige Phase, die mindestens einen flüssigen Kohlenwasserstoff enthält und
C) wenigstens ein nichtionisches Tensid in ausreichender Menge, um eine umgekehrte Mikroemulsion zu erhalten, und welches einen HLB-Wert (Gleichgewicht hydrophillipophil):
- entweder zwischen 11 und 15 besitzt, wenn das wasserlösliche kationische Vinylmonomere allein vorliegt oder in Mischung mit einem wasserlöslichen anionischen Vinylmonomeren
- oder zwischen 7,5 und 13, wenn das wasserlösliche kationische Vinylmonomere vermischt mit einem wasserlöslichen nichtionischen Vinylmonomeren vorliegt.

2. Verfahren nach Anspruch 1, dadurch gekennzeichnet, daß es zu einem Mikrolatex mit einer molaren Masse des Polymeren zwischen $2 \times 10^6$ und $15 \times 10^6$ führt.

3. Verfahren nach einem der Ansprüche 1 oder 2, dadurch gekennzeichnet, daß es zu einem Mikrolatex mit einem Polydispersitätsfaktor des Polymeren zwischen 1,05 und 1,2 führt.

4. Verfahren nach einem der Ansprüche 1 bis 3, dadurch gekennzeichnet, daß man als wasserlösliches kationisches Vinylmonomeres ein quaternäres Ammoniumsalz der allgemeinen Formel:

14

$$H_2C = C(R_1) - \underset{O}{\overset{\|}{C}} - A - R_2 - \overset{\oplus}{N}\overset{\displaystyle R_3}{\underset{\displaystyle R_5}{-R_4}} , \; X^{\ominus}$$

verwendet, in welcher:
- A ein Sauerstoffatom oder eine NH-Gruppe darstellt,
- $R_1$ ein Wasserstoffatom oder einen Methylrest darstellt,
- $R_2$ einen linearen oder verzweigten Alkylrest aus aus 2 bis 4 Kohlenstoffatomen darstellt,
- $R_3$ , $R_4$ und $R_5$ gleich oder unterschiedlich sind und lineare oder verzweigte Alkyl- oder Arylreste darstellen und
- X aus Halogenatomen und $C_2H_5SO_4$ - und $CH_3SO_4$ -Gruppen ausgewählt ist.

5. Verfahren nach einem der Ansprüche 1 bis 4, dadurch gekennzeichnet, daß man als wasserlösliches anionisches Vinylmonores ein Monomeres verwendet, das aus Acrylsäure, Methacrylsäure, 2-Acrylamido-2-methylpropansulfonsäure und ihren alkalischen Salzen ausgewählt ist.

6. Verfahren nach einem der Ansprüche 1 bis 5, dadurch gekennzeichnet, daß man als wasserlösliches nichtionisches Vinylmonomerers ein Monomeres verwendet, das aus Acrylamid, Methacrylamid und N-Vinylpyrrolidon auswählt ist.

7. Verfahren nach einem der Ansprüche 1 bis 6, dadurch gekennzeichnet, daß man eine ölige Phase verwendet, die wenigstens einen flüssigen Kohlenwasserstoff enthält, der aus linearen, verzweigten oder zyklischen, aliphatischen Kohlenwasserstoffen mit 6 bis 14 Kohlenstoffatomen ausgewählt ist.

8. Verfahren nach einem der Ansprüche 1 bis 7, dadurch gekennzeichnet, daß die Konzentration des wasserlöslichen, kationischen Vinylmonomeren in der wässrigen Lösung A) zwischen 5 und 80 Gewichtsprozent beträgt.

9. Verfahren nach einem der Ansprüche 1 bis 8, dadurch gekennzeichnet, daß man auf 100 Gewichtsteile der umgekehrten Mikroemulsion:
- 25 bis 65 Gewichtsteile der wässrigen Lösung A)
- 25 bis 60 Gewichtsteile der öligen Phase B) und
- 10 bis 27 Gewichtsteile des nichtionischen Tensids C)
vermischt.

10. Verfahren nach einem der Ansprüche 1 bis 9, dadurch gekennzeichnet, daß das Verhältnis des Vernetzungsmittels zu dem(den) im Verlauf der Stufe b) zu polymerisierenden Monomeren zwischen 0,2 und 5 Gewichtsprozent beträgt.

11. Verfahren nach einem der Ansprüche 1 bis 10, dadurch gekennzeichnet, daß man der gemäß Stufe a) hergestellten umgekehrten Mikroemulsion wenigstens ein Vernetzungsmittel in ausreichender Menge in Bezug auf die Summe der im Verlauf der Stufe b) zu polymerisierenden Monomeren hinzufügt.

12. Anwendung eines umgekehrten Mikrolatex, der nach dem Verfahren eines der Ansprüche 1 bis 10 hergestellt wird, als Flotations- und Entwässerungshilfsmittel bei der Papiermasseherstellung.

13. Anwendung eines umgekehrten Mikrolatex, der nach dem Verfahren gemäß Anspruch 11 hergestellt wird, für die Absorption und Zurückhaltung wässriger Flüssigkeiten.